# EUROPÄISCHE PATENTSCHRIFT

(11) **EP 1 614 555 B1**
(45) Veröffentlichungstag und Bekanntmachung des Hinweises auf die Patenterteilung: **30.05.2007**
(21) Anmeldenummer: 05014327.0
(22) Anmeldetag: 01.07.2005
(51) Int. Cl.: B60C 27/12

(54) **Spannvorrichtung für eine Gleitschutzkette**
Tensioning device for an anti-skid chain
dispositif de serrage pour une chaîne antidérapante

(30) Priorität: 05.07.2004 DE 102004032575
(43) Veröffentlichungstag der Anmeldung: 11.01.2006
(73) Patentinhaber: RuD Ketten Rieger & Dietz GmbH u. Co. KG, 73432 Aalen-Unterkochen (DE)
(72) Erfinder:
(74) Vertreter: Böning, Manfred

(56) Entgegenhaltungen:
- US-A- 2 012 404
- US-A- 2 192 226
- US-A1- 2002 170 646

## Beschreibung

Die Erfindung betrifft eine Spannvorrichtung für eine Gleitschutzkette mit einem längselastischen Spannelement zum Spannen und zum automatischen Nachspannen des Laufnetzes der Kette durch Einleiten einer Spannkraft in die äußere Halterung für das Laufnetz.

Aus der EP 1 174 292 A2 ist eine Spannvorrichtung der vorstehenden Art bekannt, bei der mit der äußeren Halterung der Gleitschutzkette ein erstes Ende eines einzelnen längselastischen Spannelementes verbunden ist, dessen zweites Ende mit einem Anschlussorgan für einen ebenfalls mit der äußeren Halterung verbundenen Spannstrangabschnitt versehen ist. Die bekannte Vorrichtung vermag insofern nicht voll zu befriedigen, als die Homogenität der Spannungsverteilung in der äußeren Halterung bei ihr zu wünschen übrig lässt. Hinzukommt, dass die Verankerung des ersten Endes des Spannelementes im Bereich der äußeren Halterung nicht unproblematisch ist.

Der Erfindung liegt die Aufgabe zugrunde, eine Spannvorrichtung der in Betracht gezogenen Gattung so auszugestalten, dass sie eine homogene Spannungsverteilung in der äußeren Halterung ermöglicht und dass ihr Spannelement Relativbewegungen gegenüber der äußeren Halterung ausführen kann. Gelöst wird die vorstehende Aufgabe dadurch, dass die erfindungsgemäße Vorrichtung einen mit der äußeren Halterung verbundenen Haltebügel aufweist, der mit Führungsösen für ein Spannelement versehen ist, das an seinen beiden Enden Anschlussorgane für zwei Spannstrangabschnitte der äußeren Halterung aufweist.

Die erfindungsgemäße Spannvorrichtung bietet den Vorteil, dass ihr Spannelement in den Führungsösen Ausgleichsbewegungen gegenüber der äußeren Halterung ausführen kann und dass durch die Nutzung beider Enden des Spannelementes zur Einleitung von Spannkräften in die äußere Halterung eine homogene Spannungsverteilung in der äußeren Halterung realisierbar ist.

Die Verwendung eines in eine Halterung einer Gleitschutzkette integrierten Bügels, der mit einem elastischen Spannstrang zusammenwirkt, ist aus der US 2 192 226 A an sich bekannt. Bei der bekannten Konstruktion dient der Spannstrang zum Aufweiten und Schließen der inneren Halterung der Gleitschutzkette während der Montage. Ein automatisches Nachspannen des Laufnetzes durch den Spannstrang findet nicht statt.

Weitere Merkmale und Einzelheiten der Erfindung ergeben sich aus den Unteransprüchen und der nachstehenden Beschreibung einer in den beigefügten Zeichnungen dargestellten, besonders vorteilhaften Ausführungsform der Erfindung. Es zeigen:
- Fig. 1: die Vorderansicht einer auf einen Fahrzeugreifen aufgezogenen, mit einer erfindungsgemäßen Spannvorrichtung versehenen Gleitschutzkette,

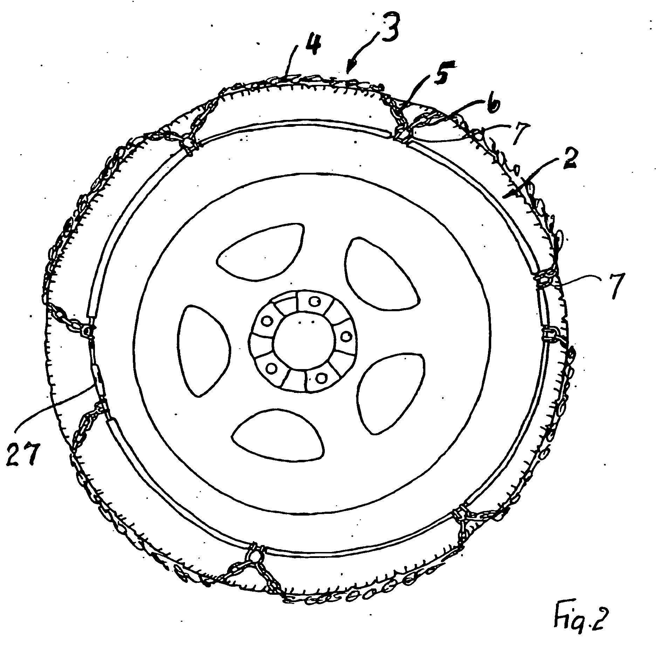

- Fig. 2: die Rückansicht der Gleitschutzkette gemäß Fig. 1 und

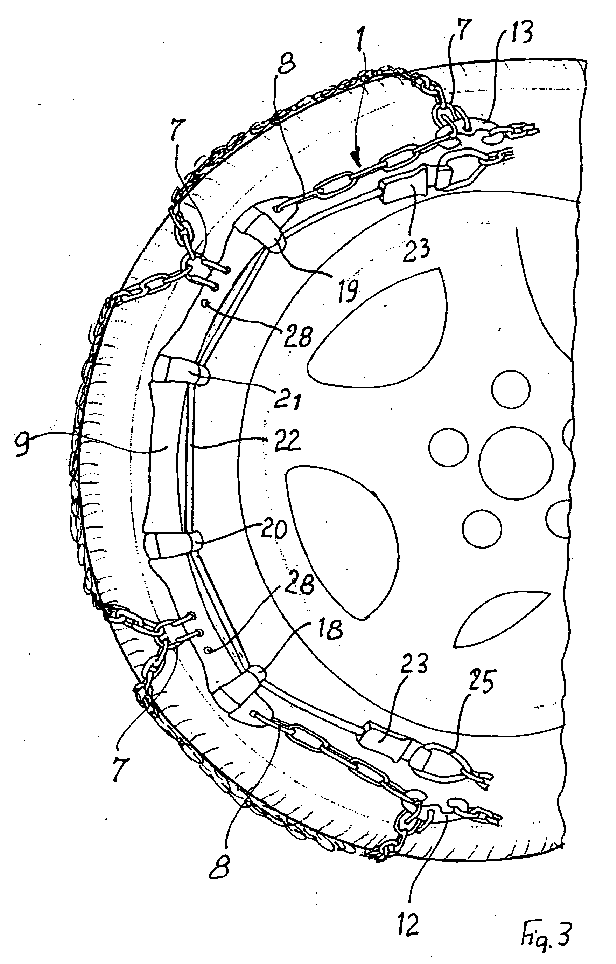

- Fig. 3: in vergrößertem Maßstab die Spannvorrichtung gemäß Fig. 1.

In den Figuren ist mit 1 die äußere und mit 2 die innere Halterung einer Gleitschutzkette bezeichnet, deren Laufnetz 3 aus in Reifenumfangsrichtung verlaufenden, geraden Kettenstrangabschnitten 4 und von deren Enden zu den Halterungen 1 und 2 verfaufenden schrägen Kettenstrangabschnitten 5 und 6 besteht, wobei die den Kettenstrangabschnitten 4 abgewandten Enden der Kettenstrangabschnitte 5 und 6 einerseits über Anschlussglieder 7 und Endglieder 8 mit einem vorzugsweise metallischen Haltebügel 9, zwei Rücklaufsperren 10, 11 und zwei Verbindungsgliedern 12 und 13 der äußeren Halterung 1 und andererseits mit der von einem Stahlseil gebildeten inneren Halterung 2 verbunden sind. In das Verbindungsglied 12 ist lösbar das Ende eines ersten von einem Kettenstrangabschnitt gebildeten Spannstrangabschnittes 14 eingehängt. Ein zweiter ebenfalls von einem Kettenstrangabschnitt gebildeter Spannstrangabschnitt 15 ist ebenfalls lösbar mit dem Verbindungsglied 13 verbunden.

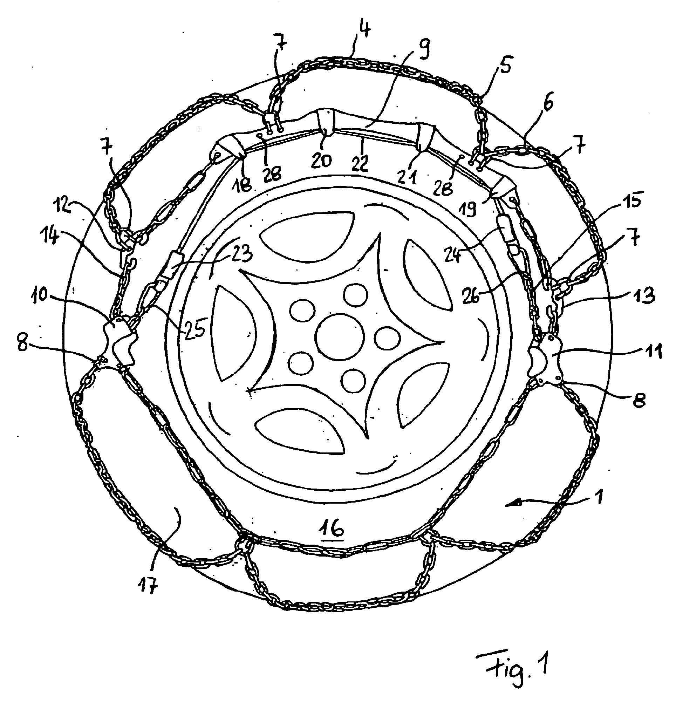

Der sich annähernd über ein Viertel des Umfangs der Flanke 16 des Fahrzeugreifens 17 erstreckende Haltebügel 9 ist mit zwei äußeren, d. h. in der Nähe seiner Enden angeordneten Führungsösen 18, 19 und zwei inneren Führungsösen 20, 21 ausgestattet. Bei den Führungsösen 18 - 21 handelt es sich vorzugsweise um auf den flachen Haltebügel 9 aufklipsbare Bauteile aus Kunststoff. In den der Achse des Fahrzeugrades 17 zugewandten Enden der Führungsösen 18 - 21 ist ein Spannelement 22 geführt, das aus einem handelsüblichen, umflochtenen Gummikabel besteht, das an seinen beiden Enden Anschlussorgane 23, 24 für Endglieder 25, 26 der Spannstrangabschnitte 14, 15 aufweist. Im Falle der Figur 1 werden die Anschlussorgane 23 und 24 von jeweils einem Haken gebildet, in den die Endglieder 25 und 26 der Spannstrangabschnitte 14 und 15 eingehängt sind.

Das Spannelement 22 kann sich in den Führungsösen 18 - 21 frei bewegen und folglich Lageunterschiede zwischen den Enden der beiden Spannstrangabschnitte 14, 15 ausgleichen.

Lockert sich das Laufnetz der Kette nach der Montage der Gleitschutzkette beim Anfahren, so wird es durch das Spannelement 21 automatisch nachgespannt, d. h. ein unerwünschter Spannungsabbau wird durch die an zwei sich im Wesentlichen diametral gegenüberliegenden Stellen der äußeren Halterung 1 angeordneten Rücklaufsperren 10 und 11 verhindert.

Der Haltebügel 9 weist zwei Gruppen von mindestens drei Löchern 28 auf. In jeweils ein Lochpaar sind Anschlussglieder 7 eingehängt. Durch die aufgrund der Lochzahl gegebene Auswahlmöglichkeit von jeweils zwei ein Lochpaar bildenden Löchern 28 eignet sich der dargestellte Haltebügel 9 beispielsweise für den Einsatz in Verbindung mit Gleitschutzketten für Fahrzeugreifen dreier unterschiedlicher Abmessungen.

## Patentansprüche

1. Spannvorrichtung für eine Gleitschutzkette mit einem längselastischen Spannelement zum Spannen und automatischen Nachspannen des Laufnetzes der Kette durch Einleiten einer Spannkraft in die äußere Halterung für das Laufnetz, **dadurch gekennzeichnet, dass** sie einen mit der äußeren Halterung (1) verbundenen Haltebügel (9) aufweist, der mit Führungsösen (18 - 21) für ein Spannelement (22) versehen ist, das an seinen beiden Enden Anschlussorgane (23, 24) für zwei Spannstrangabschnitte (14, 15) der äußeren Halterung (1) aufweist.

2. Spannvorrichtung nach Anspruch 1, **dadurch gekennzeichnet, dass** der Haltebügel (9) in die äußere Halterung (1) integriert ist und dass mit ihm an mindestens zwei im Abstand voneinander angeordneten Stellen Kettenstrangabschnitte (5, 6) des Laufnetzes (3) verbunden sind.

3. Spannvorrichtung nach Anspruch 1 oder 2, **dadurch gekennzeichnet, dass** den mit den Anschlussorganen (23, 24) des Spannelementes (2) verbundenen Spannstrangabschnitten (14, 15) der äußeren Halterung (1) Rücklaufsperren (10, 11) zugeordnet sind.

4. Spannvorrichtung nach Anspruch 3, **dadurch gekennzeichnet, dass** die Spannstrangabschnitte (14, 15) im Bereich der Rücklaufsperren (10, 11) umgelenkt werden.

5. Spannvorrichtung nach Anspruch 3 oder 4, **dadurch gekennzeichnet, dass** die Rücklaufsperren (10, 11) an zwei sich im Wesentlichen diametral gegenüberliegenden Stellen der äußeren Halterung (1) angeordnet sind.

6. Spannvorrichtung nach einem der Ansprüche 1 bis 5, **dadurch gekennzeichnet, dass** mindestens das Ende eines Spannstrangabschnittes (14 oder 15) lösbar mit der äußeren Halterung (1) verbunden ist.

7. Spannvorrichtung nach Anspruch 6, **dadurch gekennzeichnet, dass** die Spannstrangabschnitte (14, 15) der äußeren Halterung (1) als Kettenstrangabschnitte ausgebildet sind, deren eines Ende sich jeweils lösbar mit der äußeren Halterung (1) und deren anderes Ende sich jeweils lösbar mit dem Spannelement (22) verbinden lässt.

8. Spannvorrichtung nach einem der Ansprüche 1 bis 7, **dadurch gekennzeichnet, dass** der Haltebügel (9) Gruppen von Löchern (28) aufweist, in die Anschlussglieder (7) von Kettenstrangabschnitten (5, 6) des Laufnetzes (3) einhängbar sind.

9. Spannvorrichtung nach Anspruch 8, **dadurch gekennzeichnet, dass** jede Lochgruppe aus mindestens drei Löchern (28) besteht.

10. Spannvorrichtung nach einem der Ansprüche 1 bis 9, **dadurch gekennzeichnet, dass** die Führungsösen (18 - 21) lösbar mit dem Haltebügel (9) verbunden sind.

11. Spannvorrichtung nach Anspruch 10, **dadurch gekennzeichnet, dass** der Haltebügel (9) mit mindestens drei im Abstand voneinander angeordneten Führungsösen (18, 19, 20) versehen ist.

12. Spannvorrichtung nach einem der Ansprüche 1 bis 11, **dadurch gekennzeichnet, dass** mindestens jeweils eine Führungsöse (18, 19) im Bereich der Enden des Haltebügel (9) angeordnet ist.

13. Spannvorrichtung nach einem der Ansprüche 1 bis 12, **dadurch gekennzeichnet, dass** der Haltebügel (9) sich über mindestens 20 % des Umfanges der im Bereich der Flanke (16) des Fahrzeugreifens (17) zu liegen kommenden äußeren Halterung (1) der Gleitschutzkette erstreckt.

14. Spannvorrichtung nach einem der Ansprüche 1 bis 13, **dadurch gekennzeichnet, dass** das Spannelement (22) als ummanteltes Gummikabel mit endseitigen Haken (23) und/oder Ösen (24) ausgebildet ist.

15. Spannvorrichtung nach einem der Ansprüche 1 bis 14, **dadurch gekennzeichnet, dass** die Führungsösen (18 - 21) als Kunststoff-Spritzgussteile ausgebildet sind.

16. Spannvorrichtung nach einem der Ansprüche 1 bis 15, **dadurch gekennzeichnet, dass** der Haltebügel (9) aus einem gestanzten Metallteil besteht.

## Claims

1. Tensioning device for an anti-skid chain having a longitudinally elastic tensioning element for tensioning and automatically retensioning the net of the chain by applying a tensioning force to the outer support for the net, **characterised in that** it comprises a holding frame (9) which is connected to the outer support (1) and provided with guide eyes (18-21) for a tensioning element (22) which has connecting members (23, 24) at both its ends for two tensioning sections (14, 15) of the cuter support.

2. Tensioning device according to claim 1, **characterised in that** the holding frame (9) is integrated in the outer support (1) and **in that** chain sections (5, 6) of the net (3) are connected to it at at least two locations spaced apart from each other.

3. Tensioning device according to claim 1 or 2, **characterised in that** return locks (10, 11) are associated with the tensioning sections (14, 15) of the outer support (1) connected to the connecting members (23, 24) of the tensioning element (2).

4. Tensioning device according to claim 3, **characterised in that** the tensioning sections (14, 15) are deflected in the region of the return locks (10, 11).

5. Tensioning device according to claim 3 or 4, **characterised in that** the return locks (10, 11) are arranged at two substantially diametrically opposed locations of the outer support (1).

6. Tensioning device according to any of claims 1 to 5, **characterised in that** at least the end of one tensioning section (14 or 15) is releasably connected to the outer support (1).

7. Tensioning device according to claim 6, **characterised in that** the tensioning sections (14, 15) of the outer support (1) are designed as chain sections of which one end can in each case be releasably connected to the outer support (1) and of which the other end can in each case be releasably connected to the tensioning element (22).

8. Tensioning device according to any of claims 1 to 7, **characterised in that** the holding frame (9) comprises groups of holes (28) in which can be mounted connecting members (7) of chain sections (5, 6) of the net (3) .

9. Tensioning device according to claim 8, **characterised in that** each group of holes consists of at least three holes (28).

10. Tensioning device according to any of claims 1 to 9, **characterised in that** the guide eyes (18-21) are releasably connected to the holding frame (9).

11. Tensioning device according to claim 10, **characterised in that** the holding frame (9) is provided with at least three guide eyes (18, 19, 20) spaced apart from each other.

12. Tensioning device according to any of claims 1 to 11, **characterised in that** in each case at least one guide eye (18, 19) is arranged in the region of the ends of the holding frame (9).

13. Tensioning device according to any of claims 1 to 12, **characterised in that** the holding frame (9) extends over at least 20% of the circumference of the outer support (1) of the anti-skid chain which comes to lie in the region of the flank (16) of the vehicle tyre (17).

14. Tensioning device according to any of claims 1 to 13, **characterised in that** the tensioning element (22) is designed as a sheathed rubber cable with terminal hooks (23) and/or eyes (24).

15. Tensioning device according to any of claims 1 to 14, **characterised in that** the guide eyes (18-21) are designed as plastic injection mouldings.

16. Tensioning device according to any of claims 1 to 15, **characterised in that** the holding frame (9) consists of a metal stamping.

## Revendications

1. Dispositif de serrage pour une chaîne antidérapante, comprenant un élément de serrage élastique en longueur pour le serrage et le réajustement automatique du maillage de la chaîne par application d'un effort de serrage au support externe du maillage, **caractérisé en ce qu'**il présente un cintre de maintien (9) relié au support externe (1), muni d'anneaux de guidage (18-21) pour un élément de serrage (22) présentant à ses deux extrémités des organes de raccordement (23, 24) pour deux tronçons de serrage (14, 15) du support externe (1).

2. Dispositif de serrage selon la revendication 1, **caractérisé en ce que** le cintre de maintien (9) est intégré au support externe (1), et **en ce que** des tronçons de chaîne (5, 6) du maillage (3) lui sont raccordés sur au moins deux points espacés entre eux.

3. Dispositif de serrage selon la revendication 1 ou la revendication 2, **caractérisé en ce que** des blocages anti-retour (10, 11) sont associés aux tronçons de serrage (14, 15) du support externe (1) raccordées aux organes de raccordement (23, 24) de l'élément de serrage (2).

4. Dispositif de serrage selon la revendication 3, **caractérisé en ce que** les tronçons de serrage (14, 15) sont déviés au niveau des blocages anti-retour (10, 11).

5. Dispositif de serrage selon la revendication 3 ou la revendication 4, **caractérisé en ce que** les blocages anti-retour (10, 11) sont disposés sur deux points sensiblement diamétralement opposés du support externe 11).

6. Dispositif de serrage selon l'une des revendications 1 à 5, **caractérisé en ce que** l'extrémité d'un tronçon de serrage (14 ou 15) au moins est raccordée de manière amovible au support externe (1).

7. Dispositif de serrage selon la revendication 6, **caractérisé en ce que** les tronçons de serrage (14, 15) du support externe (1) sont réalisés comme tronçons de chaîne dont une extrémité peut être raccordée de manière amovible au support externe (1), et dont l'autre extrémité peut être raccordée de manière amovible à l'élément de serrage (22).

8. Dispositif de serrage selon l'une des revendications 1 à 7, **caractérisé en ce que** le cintre de maintien (9) est pourvu d'orifices (28) groupés permettant d'accrocher les éléments de raccordement (7) de tronçons de chaîne (5, 6) du maillage (3).

9. Dispositif de serrage selon la revendication 8, **caractérisé en ce que** chaque groupe d'orifices comprend au moins trois trous (28).

10. Dispositif de serrage selon l'une des revendications 1 à 9, **caractérisé en ce que** les anneaux de guidage (18-21) sont raccordés de manière amovible au cintre de maintien (9).

11. Dispositif de serrage selon la revendication 10, **caractérisé en ce que** le cintre de maintien (9) est muni d'au moins trois anneaux de guidage (18, 19, 20) espacés entre eux.

12. Dispositif de serrage selon l'une des revendications 1 à 11, **caractérisé en ce qu'**au moins un anneau de guidage (18, 19) est disposé au niveau des extrémités du cintre de maintien (9).

13. Dispositif de serrage selon l'une des revendications 1 à 12, **caractérisé en ce que** le cintre de maintien (9) s'étend sur au moins 20 % du contour du support externe (1) de la chaîne antidérapante devant reposer contre le flanc (16) du pneu de véhicule (17).

14. Dispositif de serrage selon l'une des revendications 1 à 13, **caractérisé en ce que** l'élément de serrage (22) est réalisé comme câble à gaine en caoutchouc avec des crochets d'extrémité (23) et/ou des anneaux (24).

15. Dispositif de serrage selon l'une des revendications 1 à 14, **caractérisé en ce que** les anneaux de guidage (18-21) sont exécutés comme pièces moulées par injection de matière plastique.

16. Dispositif de serrage selon l'une des revendications 1 à 15, **caractérisé en ce que** le cintre de maintien (9) est formé d'une pièce métallique découpée à la presse.
